Europäisches Patentamt

(19) European Patent Office

Office européen des brevets

(11) Publication number: **0 001 313**

**A1**

(12) # EUROPEAN PATENT APPLICATION

(21) Application number: **78200203.4**

(22) Date of filing: **23.09.78**

(51) Int. Cl.²: **C 08 F 255/00**
**C 08 F 2/18**

(30) Priority: **28.09.77 NL 7710463**

(43) Date of publication of application:
**04.04.79 Bulletin 79/7**

(84) Designated contracting states:
**BE DE FR GB**

(71) Applicant: **STAMICARBON B.V.**
**Postbus 10**
**NL-6160 MC Geleen(NL)**

(72) Inventor: **Busschers, Franciscus Albertus**
**Alexanderstraat 4**
**NL-6176 BR Spaubeek(NL)**

(72) Inventor: **De Man, Hendrikus Cornelis Johannes**
**Irenelaan 22**
**NL-6165 CP Geleen(NL)**

(74) Representative: **Hoogstraten, Willem Cornelis**
**Roeland et al,**
**OCTROOIBUREAU DSM Postbus 9**
**NL-6160 MA Geleen(NL)**

(54) Process for preparing graft copolymers from alkene-1 polymers.

(57) In a process of preparing a graft copolymer by reacting a polymer of an alkene-1 in an aqueous suspension with a polar monomer, in the presence of a radical initiator, a substantially water-insoluble radical initiator dissolved in an inert water-soluble solvent is added to an aqueous suspension of the alkene polymer, particularly a propylene polymer. High degrees of conversion of the polar monomer combine with a particularly high degree of grafting.

The modified polyolefins so prepared show particularly good adhesion properties.

EP 0 001 313 A1

0001313

## PROCESS FOR PREPARING GRAFT COPOLYMERS

The invention relates to a process of preparing a graft copolymer by reacting a polymer of an alkene-1 in an aqueous suspension with a polar monomer, in the presence of a radical initiator.

The object of the invention is to provide a solution to the problem presented by the fact that in the known (e.g. U.S. Patent Specification No. 3,644,582) modification of a polyolefin, e.g. polypropylene, by reaction with a polar monomer, e.g. acrylate monomer, in the presence of, e.g., a peroxide as radical initiator (so-called graft copolymerization), a reasonably acceptable degree of conversion of the monomer, is usually attended with a low degree of grafting and with the formation of an irregularly modified polyolefin. "Degree of grafting" is understood to mean the ratio between the number of moles of polar monomer that is grafted onto the polyolefin during the graft copolymerization reaction and the total number of moles of polar monomer converted during this reaction. By far the greater part of the polar polymer that goes get converted but is not grafted onto the polyolefin is converted into "loose" polymer of the polar monomer.

According to the invention, a modified polyolefin is prepared by reacting a polymer of an alkene-1 in an aqueous suspension with a polar monomer in the presence of a radical initiator, the process being characterized in that a substantially water-insoluble radical initiator dissolved in an inert water-soluble solvent is added to an aqueous suspension of the alkene polymer. The concept "substantially water-insoluble radical initiator" is meant to express that the quantity of radical initiator added is not soluble in the quantity of aqueous liquid of the suspension used. Analogously, the concept "water-soluble solvent" is meant to express that the quantity of the peroxide solvent added, under the prevailing reaction conditions is soluble in the quantity of aqueous suspension agent used.

In the process according to the invention a high degree of conversion of the polar monomer is combined with a particularly high degree of grafting. Consequently only a small proportion of polar monomer is converted into unwanted "loose" polymer of the polar monomer. Thanks to the high degree of grafting, the graft copolymer has, for a given content of units of the polar monomer, considerably improved adhesive properties to for example e.g. fillers, plastic surfaces, metal surfaces, glass mats, etc.

As polymer of an alkene-1 it is preferred to use a homopolymer of an alkene-1 with three or more, preferably 3 - 6, carbon atoms per molecule, a copolymer of two or more of such alkenes, or a copolymer of one or more of such alkenes with ethylene. Examples are polypropylene, polybutylene-1, poly(4-methyl pentylene-1), polyhexylene-1, propylene-butylene-1 copolymer, ethylene-propylene copolymer, and ethylene-hexylene-1 copolymer. It is also possible to use polyethylene, preferably having a density of not more than 0.935 $g/cm^3$.

The polymers may be crystalline, waxy, or rubbery. The copolymers may be random as well as so-called block copolymers.

Special preference is given to polymers of propylene, either alone or in combination with, by preference, ethylene, for instance (homo)polypropylene, statistic copolymers of propylene with not more than 5 % by weight of ethylene, or block copolymers of propylene and ethylene containing at most 20 % by weight of ethylene.

The polymer of an alkene-1 is suspended in an aqueous suspension agent. The suspension agent may be water, optionally containing minor quantities of a water-miscible organic solvent. This organic solvent may be identical with the solvent for the radical initiator. Furthermore, a suspension aid may be present, which may be a surfactant, for example a synthetic soap, or particularly a polyvinyl alcohol, whether or not partly esterified with, e.g., acetic acid. Such a product can be obtained by complete or partial saponification of polyvinyl acetate.

The polar monomer used usually comprises one or more oxygen or nitrogen functions in the molecule, including for example an ether function, an ester function, a ketone function, a carboxylic acid function, an anhydride function, an amine function, an amide function and for an imide function. The polar monomer can also be, e.g., a silane derivative. Furthermore, the molecule contains at least one ethylenic unsaturation, which is used up in the polymerization. As ethers, vinyl ethers in particular come into consideration. Suitable esters are e.g. esters of acrylic acid or methacrylic acid with aliphatic alcohols having for example 1 - 18 carbon atoms per molecule, and vinyl esters of carboxylic acids having for example 2 - 18 carbon atoms per molecule. Examples of suitable polar monomers are methacrylate esters, e.g. ethyl acrylate, butyl acrylate, 2-ethyl hexyl acrylate, methyl methacrylate, butyl methacrylate, glycidyl methacrylate and lauryl methacrylate, maleic anhydride, aminomethyl acrylate, aminomethyl methacrylate, dimethylaminoethyl methacrylate, tert-butyl aminoethyl methacrylate, methacrylamide, oleamide, maleimide, 2-vinyl pyridine, 4-vinyl pyridine, 2-methyl-5-vinyl pyridine, N-vinyl pyrrolidone, vinyl acetate, vinyl glycidyl ether, vinyl-tris(2-methoxy ethoxy) silane, vinyl trimethoxy silane, vinyl trichlorosilane, and methacryloxypropyl trimethoxy silane. It is also possible to use polar monomers with two or more ethylenic unsaturations, e.g. butyleneglycol dimethacrylate, butyleneglycol diacrylate, diethyleneglycol diacrylate, ethyleneglycol dimethacrylate, ethyleneglycol diacrylate, triethyleneglycol diacrylate, polyethyleneglycol dimethacrylate, polyethyleneglycol diacrylate, trimethylolpropane trimethacrylate, trimethylolpropane triacrylate, divinyl sulphone, bis(allyl glycol) dicarbonate, triallyl cyanurate, acetyl triallyl citrate, diallyl phthalate, tetrallyl methylenediamine, tetrallylloxyethane and 1,10-decamethyleneglycol dimethacrylate.

A preferred group of acrylate monomers includes the $C_1$-$C_4$ alkyl acrylates and methacrylates, e.g. methylacrylate, methyl methacrylate and butyl acrylate, and (meth)acrylonitrile.

The polar monomer may either be added to the aqueous suspension before the addition of the radical initiator, or introduced during the reaction.

As radical initiator may be used any suitable compound that shows sufficiently poor solubility in the aqueous phase of the suspension and sufficiently fast release of radical under the reaction conditions. Suitable radical initiators are, for instance, organic peroxides and azo compounds. Examples of suitable peroxides are benzoyl peroxide, lauryl peroxide, tert-butyl perbenzoate, dicumyl peroxide, di(tert-butyl) peroxide, cumene hydroperoxide, 2,5-dimethyl-2,5-di(tert-butylperoxy) hexane, 2,5-dimethyl-2,5-di(tert-butylperoxy) hexyne, diisopropyl peroxydicarbonate, etc. Examples of suitable azo compounds are azodicarbonamide and azobisisobutyronitrile.

The radical initiator is dissolved in a suitable inert water-soluble solvent, e.g. an organic solvent, such as an alcohol with at most 12, more in particular at most 4, carbon atoms per molecule, an ester of a carboxylic acid and an alcohol each of which has at most 6 carbon atoms per molecule, or a ketone with at most 12, preferably at most 6, carbon atoms per molecule, or a ketone with at most 12, preferably at most 6, carbon atoms per molecule. Examples of suitable solvents are methanol, ethanol, the propanols, tert-butanol, ethyl acetate, acetone, methyl ethyl ketone and methyl isobutyl ketone. Other suitable solvents are ethyl butyrate, methyl valerate, methyl caproate, butyl formiate and amyl acetate. The organic solvent may contain a subordinate quantity of water.

The reaction temperature may be, for instance, between 25 and 150 $^{\circ}$C; by preference it is 50 - 100 $^{\circ}$C. The pressure is not critical, but should be such that the aqueous liquid phase is maintained. The concentration of alkene polymer in the suspension may be, e.g. 50 to 1000 g/l, by preference 200 to 500 g/l. Lower or higher concentrations may be applied, if so desired, but they do not offer advantages. The concentration of radical initiator in the solution added to the suspension may be, e.g. 1 to 80 % by weight, preferably 5 to 25 % wt.; the quantity of radical initiator used in relation to the polar monomer may be, e.g. 0.01 to 10 % wt., preferably 0.1 to 1 % wt. The quantity of polar monomer used in relation to the alkene polymer may be, e.g. 0,1 to 100 % wt.

The modified polyolefins prepared by the process of the invention show particularly good adhesion to substrates, e.g. a polymer surface, a metal surface, a glass surface, a coat of paint, and to particles of fillers, reinforcing agents and pigments used for polyolefins, for example calcium carbonate, silica, silicic acid, mica, talc, asbestos, graphite, carbon black, carbon fibres, glass fibres, glass beads, crushed glass, gypsum, clay, alumina, aluminium hydroxide, magnesia, magnesium hydroxide, iron oxides, titania, cadmium sulphide, barium carbonate, barium sulphate, metal fibres and metal powder. They can be used as a coating on a metal or glass surface or on a surface of another polymer, in particular a polyolefin. Especially useful are laminates of unmodified polypropylene and a modified polypropylene prepared by the process of the invention.

The modified polyolefins may also be used as such or in filled, reinforced, pigmented and/or metallized condition, for making objects with excellent properties. The modified polyolefins may be blended with unmodified polyolefins so as to improve the adhesive properties thereof. Of special importance are blends of a modified polypropylene prepared by the process of the invention with unmodified polypropylene. Thanks to the high degree of grafting, it suffices to blend relatively small quantities of modified polyolefin with the unmodified polyolefin, so that the cost price of the blend can remain low.

The filler content of the blend is preferably between 10 and 70 % wt., related to the blend. The weight ratio of modified to unmodified polyolefin is, for instance, 1 : 5 to 1 : 50.

The invention will be further elucidated by means of the following, non-restrictive, examples.

Example I

250 grammes of a fine polypropylene powder (Hostalen PPN 1060 P, made by Hoechst) is suspended in 1 litre of oxygen-free water containing 1 g of polyvinyl alcohol (Poval 420, made by Kuraray) as suspension aid. The suspension is heated to 75-80 $^{\circ}$C, which temperature level is maintained.

Next there are added successively 100 g of freshly distilled butyl acrylate and a solution of 1 g of benzoyl peroxide containing 20 % by weight of water in 20 ml of ethyl acetate. The mixture is reacted at 75-80 $^{\circ}$C for 4 hours, after which the resulting modified polyolefin is recovered by filtration.

It is found that 92 % of the butyl acrylate has been converted. The degree of grafting is 95 %.

Example II

Example I is repeated, except that methyl methacrylate is used instead of butyl acrylate. 90 % of the methyl methacrylate added is found to have been converted. The degree of grafting is 90 %.

Example III

Example I is repeated except that methyl acrylate is used instead of butyl acrylate.

90 % of the methyl acrylate is found to have been converted. The degree of grafting is 80 %.

Example IV

Example I is repeated except that the alkene-1 polymer used is not polypropylene but an ethylene-propylene copolymer containing 9 % by weight of ethylene units (Propathene GY 702 M, made by ICI). The polar monomer used is butyl acrylate.

Of the butyl acrylate added, 91 % is found to have been converted. The degree of grafting is 80 %.

Example V

Example I is repeated except that the polar monomer used is methacrylonitrile instead of butyl acrylate.

Of the methacrylonitrile added, 82 % is found to have been converted. The degree of grafting is 90 %.


Example VI and Comparative Experiment

On a Polymix roller installation, set for 40 % friction and a 2 mm gap, the following products are mixed at 230 °C:

in the case of Example VI:

207.7 g of polypropylene (Hostalen PPN 1060 P, made by Hoechst), 17.3 g of the modified polyolefin obtained by means of the process of Example I and consisting of polypropylene with 26 % of grafted-on butyl acrylate, and

75 g of glass fibre staple (Owens Corning No. 421);

in the case of the Comparative Experiment:

225 g of the same polypropylene and 75 g of the same glass fibre.

From the resulting rolled sheets plates were compression moulded at 190 °C and a pressure of 5000 kg/cm$^2$. Test bars cut from these plates were examined for their E modulus parallel to the main orientation of the glass fibres ($/\!/$) and normal to this orientation ($\perp$), their bending resistance ($/\!/$ and $\perp$), and the notched and unnotched Izod impact resistance ($/\!/$ and $\perp$ in each case). The impact resistance values were determined according to ASTM D 256, with a 0.01 mm notch and without a notch. The table shows the results:

|  | E modulus (N/mm$^2$) | | Bending resistance (N/mm$^2$)´ | | Izod, notched (kJ/m$^2$) | | Izod, unnotched (kJ/m$^2$) | |
|---|---|---|---|---|---|---|---|---|
|  | $/\!/$ | $\perp$ | $/\!/$ | $\perp$ | $/\!/$ | $\perp$ | $/\!/$ | $\perp$ |
| Ex. VI | 4700 | 3070 | 117 | 71 | 39 | 25 | 58 | 35 |
| Comp.Expt. | 4300 | 3050 | 99 | 69 | 30 | 18.5 | 41 | 25 |

C L A I M S

1. Process of preparing a graft copolymer by reacting a polymer of an alkene-1 in an aqueous suspension with a polar monomer in the presence of a radical initiator, this process being characterized in that a substantially water-insoluble radical initiator dissolved in an inert water-soluble solvent is added to an aqueous suspension cf the alkene polymer.

2. Process according to claim 1, characterized in that the polymer of an alkene-1 is a polymer of an alkene-1 with three or more carbon atoms per molecule.

3. Process according to claim 2, characterized in that the alkene polymer is a propylene polymer.

1. Process according to any one of the claims 1 - 3, characterized in that the polar monomer is a vinyl ester of a carboxylic acid with 2 - 18 carbon atoms per molecule.

5. Process according to any one of the claims 1 - 3, characterized in that the polar monomer is an ester of acrylic acid or methacrylic acid with an aliphatic alcohol having 1 - 18 carbon atoms per molecule.

6. Process according to any one of the claims 1 - 5, characterized in that the radical initiator is an organic peroxide or an azo compound.

7. Process according to any one of the claims 1 - 6, characterized in that the solvent for the radical initiator is an alcohol with at most 12 carbon atoms.

8. Process according to any one of the claims 1 - 6, characterized in that the solvent for the radical initiator is an ester of a carboxylic acid and an alcohol each of which has at most 6 carbon atoms per molecule.

9. Process according to claim 8, characterized in that the ester is ethyl acetate.

10. Process according to any one of the claims 1 - 6, characterized in that the solvent for the radical initiator is a ketone with at most 12 carbon atoms per molecule.

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | <u>NL - A - 65 00146</u> (MONTECATINI)<br>& FR - A - 1 426 420<br>& GB - A - 1 098 021<br>  * Claims 1,2,5,6; page 3, lines 18-20 *<br>--<br><u>NL - A - 69 09903</u> (S.N.P.A.)<br>& FR - A - 1 591 060<br>& FR - A - 1 603 113<br>& GB 1 280 008<br>  * Claims 1, 3,4,5,6 *<br>---- | 1,4-6<br><br><br><br><br>1,4-7 | C 08 F 255/00<br>2/18<br><br><br>**TECHNICAL FIELDS SEARCHED (Int.Cl.²)**<br><br>C 08 F 255/00 -<br>255/10<br>291/02 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| Place of search | Date of completion of the search | Examiner |
|---|---|---|
| The Hague | 08-12-1978 | MEULEMANS |

The present search report has been drawn up for all claims

EPO Form 1503.1 06.78